# FASCICULE DE BREVET EUROPEEN

(11) **EP 2 812 565 B1**
(45) Date de publication et mention de la délivrance du brevet: **14.11.2018**
(21) Numéro de dépôt: 13702467.5
(22) Date de dépôt: 01.02.2013
(51) Int. Cl.: F03B 13/10, F16C 19/50, F16C 32/04, F16C 39/06, H02K 7/09, F03B 11/06, F03B 13/26, F03B 17/06

(54) **HYDROLIENNE COMPRENANT UN STATOR, UN ROTOR, UN PREMIER PALIER MAGNÉTIQUE DE SOUTIEN DU ROTOR ET UN DEUXIÈME PALIER DE SOUTIEN AVEC ÉLÉMENT(S) ROULANT(S)**
MARINE TURBINE MIT EINEM STATOR, EINEM ROTOR, EINEM ERSTEN MAGNETLAGER ZUR STÜTZUNG DES ROTORS UND EINEM ZWEITEN STÜTZLAGER MIT WÄLZKÖRPER(N)
MARINE TURBINE COMPRISING A STATOR, A ROTOR, A FIRST MAGNETIC BEARING SUPPORTING THE ROTOR AND A SECOND SUPPORT BEARING WITH ROLLING ELEMENT(S)

(30) Priorité: 06.02.2012 FR 1251082
(43) Date de publication de la demande: 17.12.2014
(73) Titulaire: GE Energy Power Conversion Technology Limited, Rugby Warwickshire CV21 1BU (GB)
(72) Inventeur: DUCHENE, Hugo, F-54000 Nancy (FR); CAGNIN, Philippe, F-54250 Champigneulles (FR)
(74) Mandataire: Serjeants LLP
(86) Numéro de dépôt international: PCT/EP2013/052083
(87) Numéro de publication internationale: WO 2013/117502

(56) Documents cités:
- EP-A1- 1 426 639
- EP-A1- 1 878 913
- WO-A1-2007/043894
- WO-A2-2008/021569
- DE-U1- 20 116 649

## Description

La présente invention concerne une hydrolienne comprenant:
- un stator,
- un rotor, le rotor étant propre à être entraîné en rotation autour d'un axe de rotation par un courant d'un liquide,
- au moins un premier palier de soutien du rotor, le ou chaque premier palier comportant un élément magnétique statorique solidaire du stator et un élément magnétique rotorique solidaire du rotor.

On connaît du document US 7,190,087 B2 une hydrolienne du type précité. Le rotor de l'hydrolienne est soutenu d'une part, via un palier magnétique comportant un élément magnétique statorique et un élément magnétique rotorique, et d'autre part, via une fine couche d'eau agencée entre le rotor et le stator. L'espace entre le stator et le rotor n'est pas isolé du courant d'eau, et la fine couche d'eau se déplace suivant la direction de l'axe de rotation lors du fonctionnement de l'hydrolienne.

Le document WO 2007/043894 divulgue un autre exemple de hydrolienne. Toutefois, une telle hydrolienne est opérationnelle seulement lorsqu'elle est immergée, ce qui complexifie sa mise au point ou encore le test de bon fonctionnement à l'issue de sa fabrication.

Le but de l'invention est donc de proposer une hydrolienne dont la mise au point et le test de bon fonctionnement à l'issue de la fabrication sont facilités.

A cet effet, l'invention a pour objet une hydrolienne du type précité, caractérisée en ce qu'elle comprend en outre au moins un deuxième palier de soutien du rotor, le ou chaque deuxième palier comportant au moins un élément roulant et les autres caractéristiques techniques selon la revendication 1.

Suivant d'autres aspects avantageux de l'invention, l'hydrolienne comprend une ou plusieurs des caractéristiques suivantes comme défini dans le revendications annexées:
- le ou chaque deuxième palier comporte une pluralité de secteurs, chaque secteur comportant au moins un élément roulant, les secteurs d'un deuxième palier respectif étant agencés successivement autour de l'axe de rotation de manière à former un anneau de révolution autour de l'axe de rotation ;
- chaque secteur est amovible indépendamment du ou des autres secteurs d'un deuxième palier respectif ;
- le ou chaque élément roulant est relié mécaniquement à une pièce parmi le stator et le rotor, et en appui contre l'autre pièce parmi le stator et le rotor, le ou chaque élément roulant étant de préférence relié mécaniquement au stator et en appui contre le rotor ;
- le ou chaque deuxième palier est propre à soutenir le rotor à la fois suivant la direction de l'axe de rotation et suivant une direction perpendiculaire à celle de l'axe de rotation ;
- le ou chaque élément roulant est mobile en rotation autour d'un axe de roulement, l'axe de roulement est disposé dans un plan longitudinal parallèle à l'axe de rotation, et l'axe de roulement est incliné par rapport à l'axe de rotation ;
- la valeur de l'angle entre l'axe de roulement et l'axe de rotation est strictement supérieure à 0° et strictement inférieure à 90°, de préférence comprise entre 30° et 60°, de préférence encore sensiblement égale à 45° ;
- le ou chaque élément roulant est mobile en rotation autour d'un axe de roulement, le ou chaque élément roulant est en forme d'un cône, et l'axe de roulement est parallèle à l'axe de rotation ;
- le stator comporte une partie active statorique et le rotor comporte une partie active rotorique, disposée sensiblement en regard de la partie active statorique selon une direction radiale perpendiculaire à l'axe de rotation, la partie active rotorique étant propre à coopérer avec la partie active statorique afin de générer un champ magnétique lorsque le rotor est en rotation autour de l'axe de rotation, et au moins un deuxième palier et une pièce parmi le stator et le rotor présentent chacun une surface de butée, les surfaces de butée étant disposées en regard l'une de l'autre et propres à venir au contact l'une de l'autre en cas de détérioration d'au moins un élément roulant, afin que l'entrefer entre la partie active statorique et la partie active rotorique soit toujours supérieur à une valeur minimale prédéterminée ;
- l'hydrolienne comprend deux premiers paliers, les deux premiers paliers étant espacés l'un de l'autre suivant l'axe de rotation ;
- l'hydrolienne comprend deux deuxièmes paliers, les deux deuxièmes paliers étant espacés l'un de l'autre suivant l'axe de rotation ;
- le stator comporte une partie active statorique et le rotor comporte une partie active rotorique, disposée sensiblement en regard de la partie active statorique selon une direction radiale perpendiculaire à l'axe de rotation, la partie active rotorique étant propre à coopérer avec la partie active statorique afin de générer un champ magnétique lorsque le rotor est en rotation autour de l'axe de rotation, et les deux premiers paliers et/ou les deux deuxièmes paliers sont disposés de part et d'autre des parties actives statorique et rotorique suivant l'axe de rotation ;
- le ou chaque élément roulant est un élément parmi le groupe consistant en : un rouleau, une aiguille et une bille ; et
- le ou chaque deuxième palier comporte une pluralité d'éléments roulants, la pluralité d'éléments roulants étant disposés suivant au moins deux rangées distinctes, chaque rangée étant agencée sensiblement selon un plan perpendiculaire à l'axe de rotation.

Ces caractéristiques et avantages de l'invention apparaitront de la lecture de la description qui va suivre, donnée uniquement à titre d'exemple non limitatif, et faite en référence aux dessins annexés, sur lesquels :
- la figure 1 est une vue en perspective d'une hydrolienne selon l'invention, comprenant un stator et un rotor,
- la figure 2 est une vue en coupe partielle et en perspective selon plan II de la figure 1,
- la figure 3 est une vue en coupe et en perspective selon le plan III de la figure 1,
- la figure 4 est un agrandissement de la zone encadrée IV de la figure 3, et
- la figure 5 est une représentation très schématique d'un secteur d'un palier de soutien du rotor de l'hydrolienne de la figure 1.

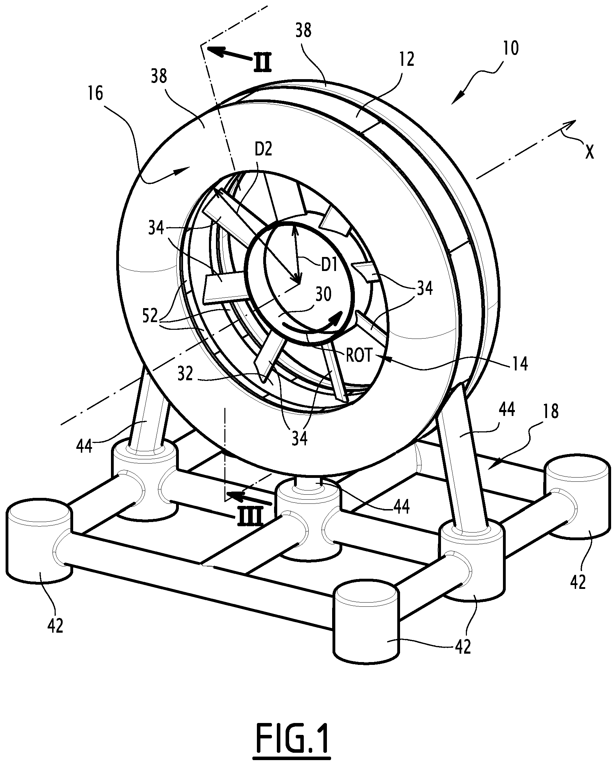

Sur la figure 1, une hydrolienne 10 comprend un stator 12, un rotor 14 mobile en rotation autour d'un axe longitudinal X, orienté de l'arrière vers l'avant, une tuyère 16 et un support 18 de maintien du stator.

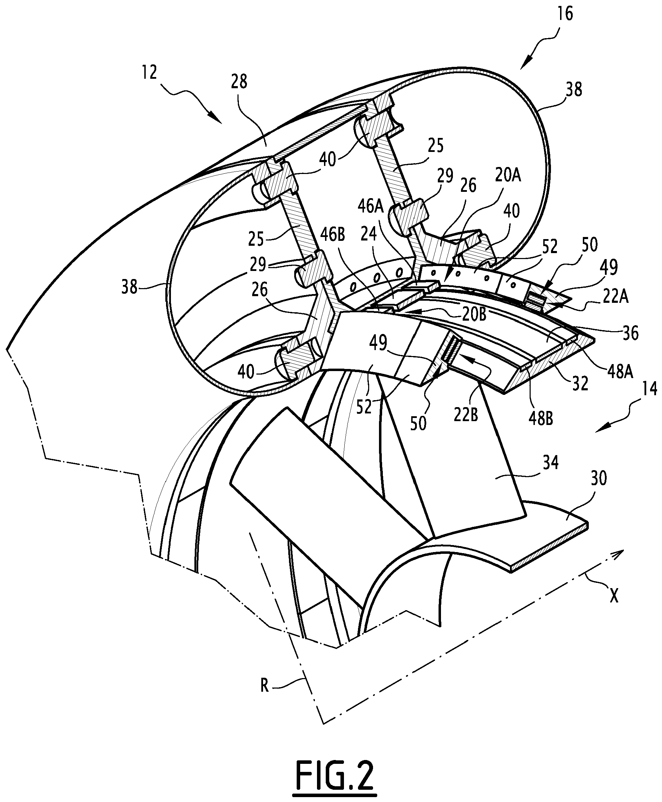

L'hydrolienne 10 comprend également deux premiers paliers 20A, 20B et deux deuxièmes paliers 22A, 22B de soutien du rotor 14, comme représenté sur la figure 2.

L'hydrolienne 10 est propre à transformer l'énergie cinétique d'un courant d'un liquide circulant à l'intérieur de la tuyère 16 selon la direction longitudinale X en énergie électrique, le courant entraînant le rotor 14 en rotation autour de l'axe X, et la rotation du rotor 14 par rapport au stator 12 générant une énergie électrique.

L'hydrolienne 10 est, par exemple, une hydrolienne sous-marine destinée à utiliser l'énergie cinétique des courants marins. En variante, l'hydrolienne est destinée à être immergée dans un cours d'eau, afin de convertir l'énergie hydraulique du cours d'eau en énergie électrique.

Le stator 12 est en forme d'un anneau de révolution autour de l'axe longitudinal X. Le stator 12 comporte une partie active statorique 24.

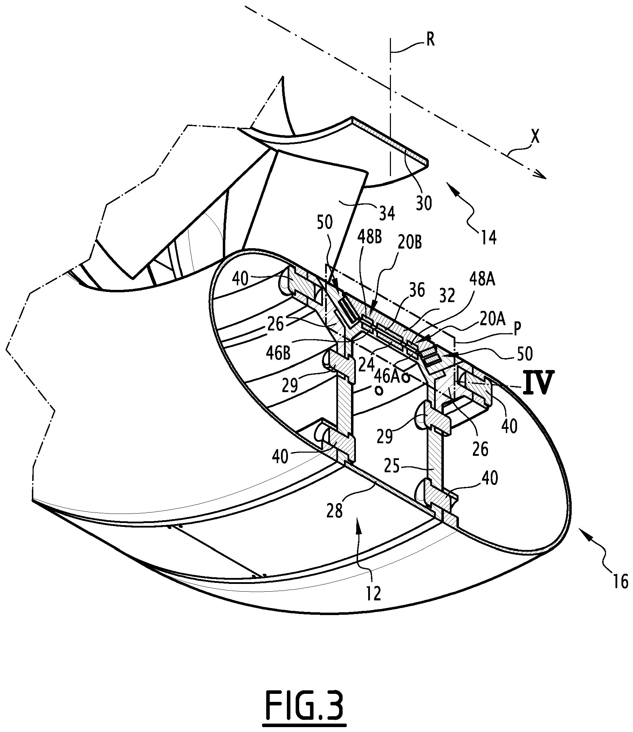

Dans l'exemple de réalisation des figures 2 et 3, le stator 12 comporte un corps principal 25, des plateaux 26 de fixation de la tuyère et des plaques amovibles 28 d'accès à l'intérieur du stator. Les plateaux de fixation 26 sont solidarisés au corps principal 25 à l'aide de moyens de fixation 29, tels que des vis.

Le rotor 14 comporte un anneau intérieur 30, un anneau extérieur 32 et une pluralité de pâles 34 s'étendant selon une direction radiale R, perpendiculaire à l'axe de rotation X, entre l'anneau intérieur 30 et l'anneau extérieur 32, comme représenté sur la figure 1. Dans le mode de réalisation décrit, le rotor 14 comporte huit pâles 34 réparties angulairement sur la périphérie extérieure de l'anneau intérieur 30. L'écart angulaire entre deux pâles 34 successives est sensiblement égal à 45°.

Le rotor 14 comprend également une partie active rotorique 36, visible sur la figure 2, agencée sur la périphérie extérieure de l'anneau extérieur 32 et propre à coopérer avec la partie active statorique 24, afin de générer un champ magnétique lors de la rotation du rotor 14 autour de l'axe X et à l'intérieur du stator 12, et créer ainsi une énergie électrique. La partie active rotorique 36 est disposée sensiblement en regard de la partie active statorique 24 selon la direction radiale R.

La tuyère 16 comporte deux demi-tuyères 38 fixées de part et d'autre du stator 12 selon la direction longitudinale X, comme représenté sur la figure 1. La tuyère 16 est en forme d'un tore de révolution autour de l'axe longitudinal X, le tore présentant une section transversale de forme oblongue. Chaque demi-tuyère 38 présente, en section suivant un plan longitudinal parallèle à l'axe X, une forme de U, une extrémité du U étant fixée au corps 25 du stator et l'autre extrémité du U étant fixée à un plateau de fixation 26 correspondant, par l'intermédiaire de moyens de fixation 40, tels que des vis, comme représenté sur la figure 2.

Le support de maintien 18 comporte une pluralité de plots 42 d'appui sur le sol et trois bras verticaux 44 de maintien du stator à l'écart du sol. Le support de maintien 18 comporte, par exemple, un châssis tubulaire.

Les deux premiers paliers 20A, 20B sont espacés l'un de l'autre suivant l'axe de rotation X. Le premier palier 20A est également appelé premier palier avant, et le premier palier 20B est également appelé premier palier arrière.

Dans l'exemple de réalisation des figures 2 et 3, les deux premiers paliers 20A, 20B sont disposés de part et d'autre des parties actives statorique 24 et rotorique 36 suivant l'axe de rotation X.

Chaque premier palier 20A, 20B comporte un élément magnétique statorique 46A, 46B solidaire du stator 12 et un aimant magnétique rotorique 48A, 48B solidaire du rotor 14. Les éléments magnétiques 46A, 48A formant le premier palier avant 20A sont également appelés éléments magnétiques avants, et les éléments magnétiques 46B, 48B formant le premier palier arrière 20B sont également appelés éléments magnétiques arrières.

Chaque premier palier 20A, 20B est, par exemple, un palier magnétique passif. Chaque premier palier 20A, 20B comporte des aimants permanents.

Les deux deuxièmes paliers 22A, 22B sont espacés l'un de l'autre suivant l'axe de rotation X. Le deuxième palier 22A est également appelé deuxième palier avant, et le deuxième palier 22B est également appelé deuxième palier arrière.

Dans l'exemple de réalisation des figures 2 et 3, les deux deuxièmes paliers 22A, 22B sont disposés de part et d'autre des parties actives statorique 24 et rotorique 36 suivant l'axe longitudinal X. Les deux deuxièmes paliers 22A, 22B sont de préférence disposés de part et d'autre des premiers paliers 20A, 20B suivant l'axe longitudinal X.

Chaque deuxième palier 22A, 22B comporte un corps 49 et une pluralité d'éléments roulants 50 répartis autour de la périphérie extérieure du rotor 14 et reliés mécaniquement au corps 49. En complément, la pluralité d'éléments roulants 50 sont disposés suivant au moins deux rangées distinctes, non représentées, chaque rangée étant agencée sensiblement selon un plan perpendiculaire à l'axe de rotation X.

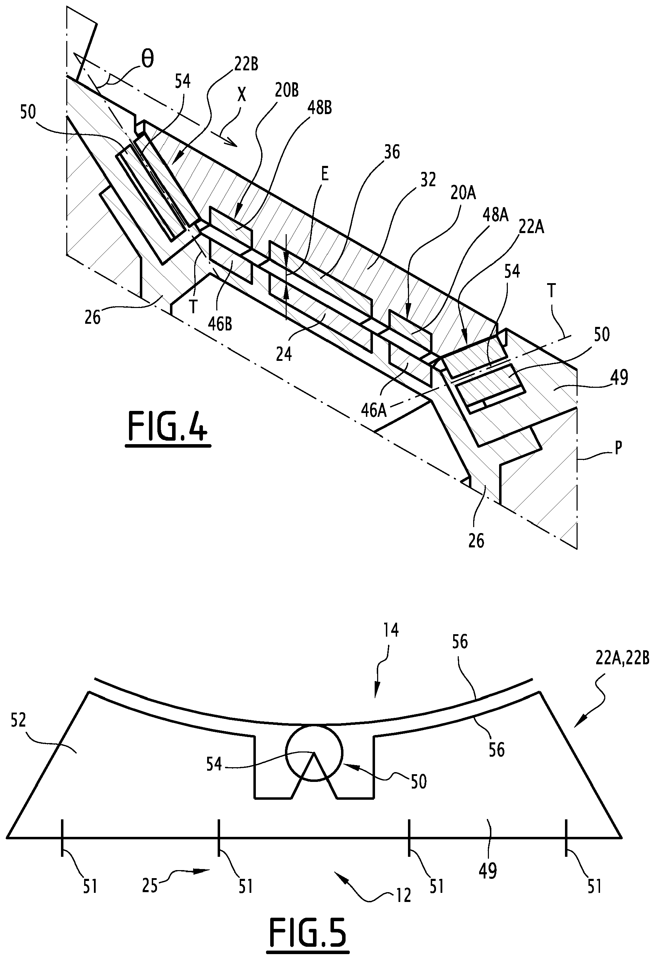

Dans le mode de réalisation décrit, chaque deuxième palier 22A, 22B est fixé au stator 12, par exemple à son corps principal 25 à l'aide de moyens de fixation 51, tels que des vis, comme représenté sur la figure 5. En complément ou en variante, chaque deuxième palier 22A, 22B est fixé au plateau de fixation 26.

En variante non représentée, chaque deuxième palier 22A, 22B est fixé au rotor 14.

Chaque deuxième palier 22A, 22B comporte une pluralité de secteurs 52 agencés successivement autour de l'axe longitudinal X de manière à former un anneau de révolution autour de l'axe longitudinal X. Le nombre N de secteurs 52 pour chaque deuxième palier 22A, 22B est compris entre 8 et 64.

Le nombre N de secteurs 52 est de préférence une fonction croissante du diamètre de l'hydrolienne 10 suivant la direction radiale R, afin de limiter l'encombrement et la masse de chaque secteur 52. Autrement dit, le nombre N est d'autant plus grand que le diamètre de l'hydrolienne 10 est important.

En complément, chaque deuxième palier 22A, 22B est propre à soutenir le rotor 14 à la fois suivant la direction de l'axe de rotation X et suivant la direction radiale R, c'est-à-dire à la fois axialement et radialement.

L'anneau intérieur 30 et l'anneau extérieur 32 sont chacun en forme d'un tube cylindrique de révolution autour de l'axe longitudinal X. L'anneau intérieur 30 et l'anneau extérieur 32 sont centrés sur l'axe longitudinal X. La longueur de l'anneau intérieur 30 et la longueur de l'anneau extérieur 32 selon la direction longitudinale X sont, par exemple, sensiblement égales. En variante, la longueur de l'anneau intérieur 30 et la longueur de l'anneau extérieur 32 selon la direction longitudinale X sont différentes.

L'anneau intérieur 30 présente un premier diamètre D1 dans le plan perpendiculaire à l'axe X, et l'anneau extérieur 32 présente un deuxième diamètre D2 de valeur supérieure à celle du premier diamètre D1. Le nombre N de secteurs 52 est de préférence une fonction croissante du deuxième diamètre D2.

La valeur du premier diamètre D1 est, par exemple, comprise entre 2 000 mm et 8 000 mm. La valeur du deuxième diamètre D2 est, par exemple, comprise entre 4 000 mm et 18 000 mm.

Chaque élément roulant 50 est mobile en rotation autour d'un axe de roulement T, l'axe de roulement T étant disposé dans un plan longitudinal P parallèle à l'axe longitudinal X.

Dans l'exemple de réalisation de la figure 4, chaque élément roulant 50 est un rouleau mobile en rotation autour d'une tige 54 solidaire du corps 49 du deuxième palier correspondant. Le rouleau est cylindrique. En variante non représentée, le rouleau est conique.

En variante non représentée, l'élément roulant 50 ne comporte pas de tige, et est maintenu dans une cage.

En variante non représentée, l'élément roulant 50 est un rouleau de type aiguille.

En variante non représentée, l'élément roulant 50 est une bille.

L'élément roulant 50 est de préférence en acier, tel qu'en acier inoxydable. En variante, l'élément roulant 50 est en aluminium, en matière plastique, en polyétheréthercétone, également appelé PEEK (de l'anglais *PolyEtherEtherKetone*), en matériau composite, ou encore en céramique.

Lorsque chaque deuxième palier 22A, 22B est propre à soutenir le rotor 14 à la fois suivant la direction de l'axe de rotation X et suivant la direction radiale R, c'est-à-dire à la fois axialement et radialement, et que l'élément roulant 50 est en forme d'un cylindre, à savoir un rouleau cylindrique ou une aiguille cylindrique, ou en forme d'une bille, l'axe de roulement T est incliné par rapport à l'axe de rotation X, comme représenté sur les figures 2 à 4. La valeur de l'angle Θ entre l'axe de roulement T et l'axe de rotation X est strictement supérieure à 0° et strictement inférieure à 90°. La valeur de l'angle Θ est de préférence comprise entre 30° et 60°, de préférence encore sensiblement égale à 45°.

Lorsque chaque deuxième palier 22A, 22B est propre à soutenir le rotor 14 à la fois axialement et radialement, et que l'élément roulant 50 est en forme d'un cône, à savoir un rouleau conique ou une aiguille conique, l'axe de roulement T est incliné par rapport à l'axe de rotation X, ou bien parallèle à l'axe de rotation X, le soutien axial étant alors assuré de par la forme conique de l'élément roulant 50.

Dans l'exemple de réalisation des figures 2 et 3, chaque deuxième palier 22A, 22B est solidaire du stator 12, et chaque élément roulant 50 est relié mécaniquement au stator 12 et en appui contre le rotor 14. En variante, chaque deuxième palier 22A, 22B est solidaire du rotor 14, et chaque élément roulant 50 est alors relié mécaniquement au rotor 14 et en appui contre le stator 12.

Chaque secteur 52 comporte au moins un élément roulant 50, de préférence de deux à huit éléments roulants 50. Dans l'exemple de réalisation de la figure 2, chaque secteur 52 comporte 3 éléments roulants 50.

En complément, chaque secteur 52 comporte une pluralité d'éléments roulants 50, la pluralité d'éléments roulants 50 étant disposée suivant au moins deux rangées distinctes, non représentées, de préférence de deux à trois rangées. Chaque rangée est agencée sensiblement selon un plan perpendiculaire à l'axe de rotation X. Chaque élément roulant 50 d'une rangée est disposé sensiblement en regard d'un élément roulant d'une autre rangée suivant l'axe de rotation X. En variante, les éléments roulants 50 sont disposés en quinconce d'une rangée à l'autre.

Chaque secteur 52 est amovible indépendamment du ou des autres secteurs 52 du deuxième palier 22A, 22B correspondant.

Dans l'exemple de réalisation de la figure 2, chaque secteur 52 est, autrement dit, détachable du stator 12 indépendamment du ou des autres secteurs 52. En variante non représentée, lorsque chaque deuxième palier 22A, 22B est fixé au rotor 14, chaque secteur 52 est détachable du rotor 14 indépendamment du ou des autres secteurs 52.

En complément, les deuxièmes paliers 22A, 22B et le stator 12 présentent chacun une surface de butée 56, les surfaces de butée 56 étant disposées en regard l'une de l'autre, comme représenté sur la figure 5. Les surfaces de butée 56 sont propres à venir au contact l'une de l'autre en cas de détérioration d'au moins un élément roulant 50, afin que l'entrefer E entre la partie active statorique 24 et la partie active rotorique 36 soit toujours supérieur à une valeur minimale prédéterminée.

En variante non représentée, lorsque les deuxièmes éléments 22A, 22B sont solidaires du rotor 14, les deuxièmes paliers 22 A, 22B et le rotor 14 présentent chacun une surface de butée, les surfaces de butée étant disposées en regard l'une de l'autre. De manière analogue, les surfaces de butée sont propres à venir au contact l'une de l'autre en cas de détérioration d'au moins un élément roulant 50, afin que l'entrefer E soit toujours supérieur à une valeur minimale prédéterminée.

Le fonctionnement de l'hydrolienne 10 selon l'invention va être à présent expliqué.

Lorsque l'hydrolienne 10 est placée dans un courant d'eau, le courant exerce une pression sur les pâles 24 ce qui entraine le rotor 14 en rotation autour de l'axe longitudinal X dans le sens de la flèche ROT (figure 1). La vitesse de rotation est initialement faible et augmente avec l'écoulement de l'eau le long des pâles 24.

La partie active rotorique 36 est alors mobile par rapport à la partie active statorique 24, ce qui engendre un champ magnétique et induit un courant électrique dans le stator 12. L'énergie électrique, ainsi générée par l'hydrolienne 10 à partir de l'énergie hydraulique du courant, est ensuite véhiculée vers un réseau électrique.

L'hydrolienne 10 permet de délivrer une puissance électrique supérieure à 100 kW pour des vitesses de rotation du rotor 14 par exemple comprises entre 20 et 40 tours par minute.

Lorsque le rotor 14 est en rotation autour de l'axe longitudinal X, les premiers paliers 20A, 20B et les deuxièmes paliers 22A, 22B permettent de soutenir et de positionner le rotor 14 suivant la direction radiale R, perpendiculaire à l'axe longitudinal X.

En complément, les deuxièmes paliers 22A, 22B permettent de soutenir et de positionner le rotor 14 suivant l'axe longitudinal X.

Les premiers et deuxièmes paliers 20A, 20B, 22A, 22B soutiennent également le rotor 14 lorsqu'il est à l'arrêt, qu'il soit immergé ou non.

La présence des deuxièmes paliers 22A, 22B permet d'améliorer le soutien du rotor 14 en complément des premiers paliers 20A, 20B, notamment lorsque l'hydrolienne 10 n'est pas immergée.

Les deuxièmes paliers 22A, 22B permettent en outre de faciliter la mise en rotation du rotor 14 de par les éléments roulants 50, permettant plus généralement d'améliorer le rendement de l'hydrolienne 10, quel que soit le sens du courant d'eau selon la direction longitudinale X.

En complément, lorsque l'axe de roulement T de chaque élément roulant 50 est incliné par rapport à l'axe de rotation X, les deuxièmes paliers 22A, 22B font également office de butée axiale, afin de permettre le positionnement du rotor 14 selon l'axe longitudinal X.

En complément encore, la présence des surfaces de butée 56 permet, en cas de détérioration d'un ou plusieurs éléments roulants 50, de limiter le déplacement du rotor 14, les surfaces de butée 56 venant alors au contact l'une de l'autre avant que la partie active statorique 24 ne soit trop proche de la partie active rotorique 36.

Ceci permet alors de garantir que l'entrefer E entre la partie active statorique 24 et la partie active rotorique 36 est toujours supérieur à une valeur minimale prédéterminée. Autrement dit, les surfaces de butée 56 permettent d'éviter une détérioration des parties actives statorique 24 et rotorique 36 en cas d'avarie sur un ou plusieurs éléments roulants 50.

La maintenance de l'hydrolienne 10 est également facilitée de par les secteurs 52 amovibles indépendamment les uns des autres. En effet, en cas d'usure ou de détérioration d'un élément roulant 50 pour un deuxième palier 22A, 22B donné, il suffit alors de détacher le secteur 52 pour lequel l'élément roulant 50 est usé ou détérioré, sans avoir à démonter les autres secteurs 52 du deuxième palier 22A, 22B donné. Le secteur 52 contenant l'élément roulant usé ou détérioré est ensuite éventuellement remplacé par un secteur 52 neuf ou réparé.

On conçoit ainsi que l'hydrolienne 10 selon l'invention permet de faciliter son assemblage, sa mise au point et le test de bon fonctionnement à l'issue de sa fabrication, tout en en offrant une maintenance simplifiée.

## Revendications

1. Hydrolienne (10) comprenant :
- un stator (12),
- un rotor (14), le rotor (14) étant propre à être entraîné en rotation autour d'un axe de rotation (X) par un courant d'un liquide,
- au moins un premier palier (20A, 20B) de soutien du rotor (14), le ou chaque premier palier (20A, 20B) comportant un élément magnétique statorique (46A, 46B) solidaire du stator (12) et un élément magnétique rotorique (48A, 48B) solidaire du rotor (14),
- au moins un deuxième palier (22A, 22B) de soutien du rotor (14), le ou chaque deuxième palier (22A, 22B) comportant au moins un élément roulant (50),
dans la quelle le stator (12) comporte une partie active statorique (24) et le rotor (14) comporte une partie active rotorique (36), disposée sensiblement en regard de la partie active statorique (24) selon une direction radiale (R) perpendiculaire à l'axe de rotation (X), la partie active rotorique (36) étant propre à coopérer avec la partie active statorique (24) afin de générer un champ magnétique lorsque le rotor (14) est en rotation autour de l'axe de rotation (X), et
**caractérisée en ce que** un deuxième palier (22A, 22B) et une pièce parmi le stator (12) et le rotor (14) présentent chacun une surface de butée (56), les surfaces de butée (56) étant disposées en regard l'une de l'autre et propres à venir au contact l'une de l'autre en cas de détérioration d'au moins un élément roulant (50), afin que l'entrefer (E) entre la partie active statorique (24) et la partie active rotorique (36) soit toujours supérieur à une valeur minimale prédéterminée.

2. Hydrolienne (10) selon la revendication 1, dans laquelle le ou chaque deuxième palier (22A, 22B) comporte une pluralité de secteurs (52), chaque secteur (52) comportant au moins un élément roulant (50), les secteurs (52) d'un deuxième palier (22A, 22B) respectif étant agencés successivement autour de l'axe de rotation (X) de manière à former un anneau de révolution autour de l'axe de rotation (X).

3. Hydrolienne (10) selon la revendication 2, dans laquelle chaque secteur (52) est amovible indépendamment du ou des autres secteurs (52) d'un deuxième palier (22A, 22B) respectif.

4. Hydrolienne (10) selon l'une quelconque des revendications précédentes, dans laquelle le ou chaque élément roulant (50) est relié mécaniquement à une pièce parmi le stator (12) et le rotor (14), et en appui contre l'autre pièce parmi le stator (12) et le rotor (14), le ou chaque élément roulant (50) étant de préférence relié mécaniquement au stator (12) et en appui contre le rotor (14).

5. Hydrolienne (10) selon l'une quelconque des revendications précédentes, dans laquelle le ou chaque deuxième palier (22A, 22B) est propre à soutenir le rotor (14) à la fois suivant la direction de l'axe de rotation (X) et suivant une direction (R) perpendiculaire à celle de l'axe de rotation (X).

6. Hydrolienne (10) selon la revendication 5, dans laquelle le ou chaque élément roulant (50) est mobile en rotation autour d'un axe de roulement (T), l'axe de roulement (T) est disposé dans un plan longitudinal (P) parallèle à l'axe de rotation (X), et l'axe de roulement (T) est incliné par rapport à l'axe de rotation (X).

7. Hydrolienne (10) selon la revendication 6, dans laquelle la valeur de l'angle (8) entre l'axe de roulement (T) et l'axe de rotation (X) est strictement supérieure à 0° et strictement inférieure à 90°, de préférence comprise entre 30° et 60°, de préférence encore sensiblement égale à 45°.

8. Hydrolienne (10) selon la revendication 5, dans laquelle le ou chaque élément roulant (50) est mobile en rotation autour d'un axe de roulement (T), le ou chaque élément roulant (50) est en forme d'un cône, et l'axe de roulement (T) est parallèle à l'axe de rotation (X).

9. Hydrolienne (10) selon l'une quelconque des revendications précédentes, dans laquelle l'hydrolienne (10) comprend deux premiers paliers (20A, 20B), les deux premiers paliers (20A, 20B) étant espacés l'un de l'autre suivant l'axe de rotation (X).

10. Hydrolienne (10) selon l'une quelconque des revendications précédentes, dans laquelle l'hydrolienne (10) comprend deux deuxièmes paliers (22A, 22B), les deux deuxièmes paliers (22A, 22B) étant espacés l'un de l'autre suivant l'axe de rotation (X).

11. Hydrolienne (10) selon la revendication 9 ou 10, dans laquelle le stator (12) comporte une partie active statorique (24) et le rotor (14) comporte une partie active rotorique (36), disposée sensiblement en regard de la partie active statorique (24) selon une direction radiale (R) perpendiculaire à l'axe de rotation (X), la partie active rotorique (36) étant propre à coopérer avec la partie active statorique (24) afin de générer un champ magnétique lorsque le rotor (14) est en rotation autour de l'axe de rotation (X), et dans laquelle les deux premiers paliers (20A, 20B) et/ou les deux deuxièmes paliers (22A, 22B) sont disposés de part et d'autre des parties actives statorique (24) et rotorique (36) suivant l'axe de rotation (X).

12. Hydrolienne (10) selon l'une quelconque des revendications précédentes, dans laquelle le ou chaque élément roulant (50) est un élément parmi le groupe consistant en : un rouleau, une aiguille et une bille.

13. Hydrolienne (10) selon l'une quelconque des revendications précédentes, dans laquelle le ou chaque deuxième palier (22A, 22B) comporte une pluralité d'éléments roulants (50), la pluralité d'éléments roulants (50) étant disposés suivant au moins deux rangées distinctes, chaque rangée étant agencée sensiblement selon un plan perpendiculaire à l'axe de rotation (X).

## Patentansprüche

1. Meeresströmungsturbine (10), die aufweist:
- einen Stator (12),
- einen Rotor (14), wobei der Rotor (14) eingerichtet ist, um durch eine Strömung einer Flüssigkeit um eine Drehachse (X) drehangetrieben zu werden,
- wenigstens ein erstes Lager (20A, 20B) zur Lagerung des Rotors (14), wobei das oder jedes erste Lager (20A, 20B) ein magnetisches Statorelement (46A, 46B), das mit dem Stator (12) fest verbunden ist, und ein magnetisches Rotorelement (48A, 48B) aufweist, das mit dem Rotor (14) fest verbunden ist,
- wenigstens ein zweites Lager (22A, 22B) zur Lagerung des Rotors (14), wobei das oder jedes zweite Lager (22A, 22B) wenigstens einen Wälzkörper (50) aufweist,
wobei der Stator (12) einen aktiven Statorteil (24) aufweist und der Rotor (14) einen aktiven Rotorteil (36) aufweist, der in einer radialen Richtung (R) senkrecht zu der Drehachse (X) dem aktiven Statorteil (24) im Wesentlichen gegenüberliegend angeordnet ist, wobei der aktive Rotorteil (36) eingerichtet ist, um mit dem aktiven Statorteil (24) zusammenzuwirken, um ein magnetisches Feld zu erzeugen, wenn sich der Rotor (14) um die Drehachse (X) dreht,
**dadurch gekennzeichnet, dass**
ein zweites Lager (22A, 22B) und einer von dem Stator (12) und dem Rotor (14) jeweils eine Anlauffläche (56) aufweisen, wobei die Anlaufflächen (56) einander gegenüberliegend angeordnet und eingerichtet sind, um im Falle einer Beeinträchtigung wenigstens eines Wälzkörpers (50) miteinander in Kontakt zu treten, so dass der Luftspalt (E) zwischen dem aktiven Statorteil (24) und dem aktiven Rotorteil (36) stets größer als ein vorbestimmter Minimalwert ist.

2. Meeresströmungsturbine (10) nach Anspruch 1, wobei das oder jedes zweite Lager (22A, 22B) mehreren Sektoren (52) aufweist, wobei jeder Sektor (52) wenigstens einen Wälzkörper (50) aufweist, wobei die Sektoren (52) eines jeweiligen zweiten Lagers (22A, 22B) um die Drehachse (X) aufeinanderfolgend derart angeordnet sind, dass sie einen Umlaufring um die Drehachse (X) bilden.

3. Meeresströmungsturbine (10) nach Anspruch 2, wobei jeder Sektor (52) unabhängig von dem anderen Sektor oder den anderen Sektoren (52) eines jeweiligen zweiten Lagers (22A, 22B) entfernbar ist.

4. Meeresströmungsturbine (10) nach einem beliebigen der vorhergehenden Ansprüche, wobei der oder jeder Wälzkörper (50) mit einem von dem Stator (12) und dem Rotor (14) mechanisch verbunden ist und an dem anderen von dem Stator (12) und dem Rotor (14) anliegt, wobei der oder jeder Wälzkörper (50) vorzugsweise mit dem Stator (12) mechanisch verbunden ist und an dem Rotor (14) anliegt.

5. Meeresströmungsturbine (10) nach einem beliebigen der vorhergehenden Ansprüche, wobei das oder jedes zweite Lager (22A, 22B) eingerichtet ist, um den Rotor (14) sowohl in der Richtung der Drehachse (X) als auch in einer zu der Drehachse (X) senkrechten Richtung (R) zu lagern.

6. Meeresströmungsturbine (10) nach Anspruch 5, wobei der oder jeder Wälzkörper (50) um eine Wälzachse (T) drehbar ist, wobei die Wälzachse (T) in einer zu der Drehachse (X) parallelen Längsebene (P) angeordnet ist und die Wälzachse (T) in Bezug auf die Drehachse (X) geneigt ist.

7. Meeresströmungsturbine (10) nach Anspruch 6, wobei der Wert des Winkels (8) zwischen der Wälzachse (T) und der Drehachse (X) strikt größer als 0° und strikt kleiner als 90° ist, vorzugsweise zwischen 30° und 60° liegt, bevorzugterweise im Wesentlichen gleich 45 °ist.

8. Meeresströmungsturbine (10) nach Anspruch 5, wobei der oder jeder Wälzkörper (50) um eine Wälzachse (T) drehbar ist, wobei der oder jeder Wälzkörper (50) die Form eines Konus aufweist und die Wälzachse (T) parallel zu der Drehachse (X) verläuft.

9. Meeresströmungsturbine (10) nach einem beliebigen der vorhergehenden Ansprüche, wobei die Meeresströmungsturbine (10) zwei erste Lager (20A, 20B) aufweist, wobei die zwei ersten Lager (20A, 20B) entlang der Drehachse (X) voneinander beabstandet sind.

10. Meeresströmungsturbine (10) nach einem beliebigen der vorhergehenden Ansprüche, wobei die Meeresströmungsturbine (10) zwei zweite Lager (22A, 22B) aufweist, wobei die zwei zweiten Lager (22A, 22B) entlang der Drehachse (X) voneinander beabstandet sind.

11. Meeresströmungsturbine (10) nach Anspruch 10 oder 11, wobei der Stator (12) einen aktiven Statorteil (24) aufweist und der Rotor (14) einen aktiven Rotorteil (36) aufweist, der in einer radialen Richtung (R) senkrecht zu der Drehachse (X) dem aktiven Statorteil (24) im Wesentlichen gegenüberliegend angeordnet ist, wobei der aktive Rotorteil (36) eingerichtet ist, um mit dem aktiven Statorteil (24) zusammenzuwirken, um ein magnetisches Feld zu erzeugen, wenn sich der Rotor (14) um die Drehachse (X) dreht, und wobei die zwei ersten Lager (20A, 20B) und/oder die zwei zweiten Lager (22A, 22B) entlang der Drehachse (X) auf beiden Seiten des aktiven Statorteils (24) und Rotorteils (36) angeordnet sind.

12. Meeresströmungsturbine (10) nach einem beliebigen der vorhergehenden Ansprüche, wobei der oder jeder Wälzkörper (50) ein Element aus der Gruppe ist, bestehend aus: einer Rolle, einer Nadel und einer Kugel.

13. Meeresströmungsturbine (10) nach einem beliebigen der vorhergehenden Ansprüche, wobei das oder jedes zweite Lager (22A, 22B) mehrere Wälzkörper (50) aufweist, wobei die mehreren Wälzkörper (50) in wenigstens zwei verschiedenen Reihen angeordnet sind, wobei jede Reihe im Wesentlichen in einer zu der Drehachse (X) senkrechten Ebene angeordnet ist.

## Claims

1. Marine turbine (10) comprising:
- a stator (12),
- a rotor (14), the rotor (14) being able to be driven in rotation about a rotation axis (X) by a liquid current,
- at least one first bearing (20A, 20B) supporting the rotor (14), the or each first bearing (20A, 20B) comprising a magnetic stator element (46A, 46B) fixed to the stator (12) and a magnetic rotor element (48A, 48B) fixed to the rotor (14),
- at least one second bearing (22A, 22B) supporting the rotor (14), the or each second bearing (22A, 22B) comprising at least one rolling element (50),
wherein the stator (12) comprises an active stator part (24) and the rotor (14) comprises an active rotor part (36) which is arranged substantially facing the active stator part (24) in a radial direction (R) perpendicular to the rotation axis (X), the active rotor part (36) being able to cooperate with the active stator part (24) in order to generate a magnetic field when the rotor (14) is rotating around the rotation axis (X), and
**characterised in that** a second bearing (22A, 22B) and one of either the stator (12) or the rotor (14) each have a stop surface (56), the stop surfaces (56) being arranged facing each other and able to come into contact with each other in the case of deterioration of at least one rolling element (50) such that the air gap (E) between the active stator part (24) and the active rotor part (36) is always greater than the minimum preset value.

2. Marine turbine (10) according to claim 1, wherein the or each second bearing (22A, 22B) comprises a plurality of sectors (52), each sector (52) comprising at least one rolling element (50), the sectors (52) of a respective second bearing (22A, 22B) being arranged successively around the rotation axis (X) so as to form a revolution ring around the rotation axis (X).

3. Marine turbine (10) according to claim 2, wherein each sector (52) is removable independently of the other sector(s) (52) of a respective second bearing (22A, 22B).

4. Marine turbine (10) according to any of the preceding claims, wherein the or each rolling element (50) is mechanically connected to the one of the stator (12) and the rotor (14) and rests against the other of the stator (12) and the rotor (14), the or each rolling element (50) being preferably connected mechanically to the stator (12) and resting against the rotor (14).

5. Marine turbine (10) according to any of the preceding claims, wherein the or each second bearing (22A, 22B) is able to support the rotor (14) both in the direction of the rotation axis (X) and in a direction (R) perpendicular to that of the rotation axis (X).

6. Marine turbine (10) according to claim 5, wherein the or each rolling element (50) is movable in rotation about a rolling axis (T), the rolling axis (T) is arranged in a longitudinal plane (P) parallel to the rotation axis (X), and the rolling axis (T) is inclined relative to the rotation axis (X).

7. Marine turbine (10) according to claim 6, wherein the value of the angle (8) between the rolling axis (T) and the rotation axis (X) is strictly greater than 0° and strictly less than 90°, preferably between 30° and 60°, further preferably substantially equal to 45°.

8. Marine turbine (10) according to claim 5, wherein the or each rolling element (50) is movable around the rolling axis (T), the or each rolling element (50) is conical in shape, and the rolling axis (T) is parallel to the rotation axis (X).

9. Marine turbine (10) according to any of the preceding claims, wherein the marine turbine (10) comprises two first bearings (20A, 20B), the two first bearings (20A, 20B) being spaced apart from each other along the rotation axis (X).

10. Marine turbine (10) according to any of the preceding claims, wherein the marine turbine (10) comprises two second bearings (22A, 22B), the two second bearings (22A, 22B) being spaced apart from each other along the rotation axis (X).

11. Marine turbine (10) according to claim 9 or 10, wherein the stator (12) comprises an active stator part (24) and the rotor (14) comprises an active rotor part (36) which is arranged substantially facing the active stator part (24) in a radial direction (R) perpendicular to the rotation axis (X), the active rotor part (36) being able to cooperate with the active stator part (24) in order to generate a magnetic field when the rotor (14) is rotating around the rotation axis (X), and wherein the two first bearings (20A, 20B) and/or the two second bearings (22A, 22B) are arranged on either side of the active stator part (24) and active rotor part (36) along the axis of rotation (X).

12. Marine turbine (10) according to any of the preceding claims, wherein the or each rolling element (50) is an element from the group comprising a roller, a needle and a ball.

13. Marine turbine (10) according to any of the preceding claims, wherein the or each second bearing (22A, 22B) comprises a plurality of roller elements (50), the plurality of roller elements (50) being arranged in at least two separate rows, each row being arranged substantially along a plane perpendicular to the rotation axis (X).
